Europäisches Patentamt

European Patent Office

Office européen des brevets

(19)

(11) Veröffentlichungsnummer: **0 141 061**

**A1**

(12) **EUROPÄISCHE PATENTANMELDUNG**

(21) Anmeldenummer: **84108973.3**

(22) Anmeldetag: **28.07.84**

(51) Int. Cl.⁴: **G 05 B 11/30**
G 05 D 7/06, G 05 D 16/20

(30) Priorität: **27.09.83 CH 5221/83**

(43) Veröffentlichungstag der Anmeldung:
**15.05.85 Patentblatt 85/20**

(84) Benannte Vertragsstaaten:
**AT DE FR GB IT NL**

(71) Anmelder: **GEORG FISCHER AKTIENGESELLSCHAFT**
**Mühlentalstrasse 105**
**CH-8201 Schaffhausen(CH)**

(72) Erfinder: **Steinemann, Robert**
**Bröckligraben 6**
**CH-8240 Thayngen(CH)**

(54) **Verfahren und Einrichtung zur Regelung einer Grösse.**

(57) Bei einem, einen Istwertgeber (6) und einen Sollwertgeber (7) aufweisenden Regelkreis wird das aus einem Regler (11) kommende analoge Regelsignal, in zwei Signalstränge (12a, 12b) aufgeteilt, wobei es in einem Signalstrang (12b) durch ein Signal-Umkehr-Gerät (14) von positiv in negativ oder umgekehrt umgewandelt wird. In den beiden Signalsträngen ist je ein Spannungs-Frequenz-Wandler (13a, 13b), ein Impuls-Former (15a, 15b) und ein Verstärker (18a, 18b) angeordnet. Diese erzeugen Impulssignale mit einer zur Spannung des Regelsignals abhängiger Frequenz. Diese Impulssignale steuern Magnet-Absperr-Ventiel (20a, 20b) in einem Servo-Steuerkreis (21) für das mit einem Druckmittel beaufschlagbare Stellglied (22) des Stellorgans (2).

Fig. 1

GEORG FISCHER AKTIENGESELLSCHAFT,     8201 Schaffhausen

2390/FIP /26.9.1983 / Li-mw /

Verfahren und Einrichtung zur Regelung einer Grösse

Die Erfindung betrifft ein Verfahren zur Regelung einer
Grösse, insbesonders zur Regelung der Durchflussmenge
und/oder des Druckes eine Mediums wie es im Oberbegriff von Anspruch 1 gekennzeichnet ist und eine zur
Durchführung des Verfahrens erforderliche Einrichtung,
wie sie im Oberbegriff von Anspruch 6 gekennzeichnet
ist.

Derartige Regelverfahren bzw. Einrichtungen sind bekannt.
Hierbei werden im Allgemeinen analoge Regelsignale umgewandelt und als 3-Punkt-Signale direkt einem elektrischen
Stellmotor zugeleitet. Ist das Stellorgan ein hydraulisch
oder pneumatisch betätigbares Ventil bzw. Stellglied,
wird in bekannter Weise zu dem analogen elektrischen
Regelsignal ein entsprechender Druck eines Mediums in
einem zweiten hydraulischen oder pneumatischen Regelkreis eingestellt, wobei die Regeleinrichtung hierfür
ein entsprechendes Umsetzgerät wie z.B. ein durch Stromstärke gesteuerter Druckregler aufweisen muss.

- 2 -

Dieses mit mehreren Regelkreisen sehr aufwendige Regelverfahren hat ausserdem den Nachteil, dass das gleiche
elektrische Regelgerät nicht auch gleichzeitig für die
direkte Regelung eines elektrischen Stellmotors verwendbar ist.

Aufgabe der vorliegenden Erfindung ist die Schaffung
eines Regelverfahrens und einer dafür erforderlichen
Einrichtung der eingangs genannten Art, bei welchem
die elektrischen Ausgangssignale der Regeleinrichtung entweder direkt zur Regelung eines elektrischen Motors am
Stellorgan oder aber auch für mit einem Druckmedium
beaufschlagbare Stellorgane verwendbar sind, wobei
gleichzeitig für letztere Anwendung die bisher erforderlichen Regelverfahren und die Regeleinrichtung
vereinfacht werden sollen.

Erfindungsgemäss sind dies durch die kennzeichnenden
Verfahrensmerkmale von Anspruch 1 und die kennzeichnenden
Vorrichtungsmerkmale von Anspruch 6 erreicht.

Weitere vorteilhafte Ausgestaltungen der Erfindung sind
in den abhängigen Ansprüchen gekennzeichnet.

Durch die kennzeichnende Lösung erhält das Stellorgan eine
Impulsfolge, deren Frequenz bei grösser werdender Abweichung wächst. Das Stellglied wird schrittweise an die
gewünschte Stellung herangeführt, derart, dass bei
grosser Abweichung zwischen Soll- und Istwert, die
Stellgeschwindigkeit hoch ist und bei kleiner werdender
Abweichung sinkt.

Die Erfindung ist in den beiliegenden Zeichnungen beispielsweise dargestellt und nachfolgend beschrieben.

Es zeigen:

Fig. 1            ein Blockschaltbild für die Regelung
                 der Durchflussmenge in einer Rohrleitung
                 mit einem Druckmedium beaufschlagbaren Stellorgan

Fig. 2 und 3     Impulssignale mit unterschiedlichen Frequenzen und

Fig. 4           eine Ausführungsvariante für die Regelung
                 der Position eines elektrischen Stellorgans in vereinfachter Darstellung.

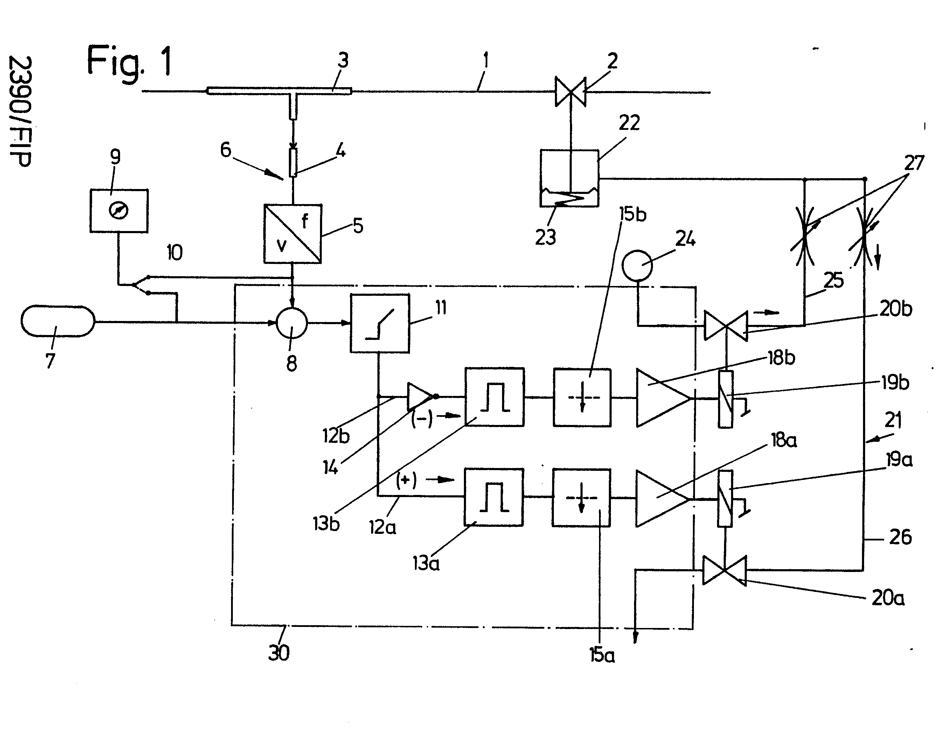

Fig. 1 zeigt ein in einer Rohrleitung 1 angeordnetes z.B.
als Durchflussregelventil oder Druckregelventil ausgebildetes Stellorgan 2 und eine Durchfluss- oder Druck-
Messeinrichtung 3. Die Messeinrichtung 3 bildet zusammen
mit einem Sensor 4 und einem Frequenz-Spannungswandler 5
einen Istwertgeber 6, wobei die vom Sensor ausgehenden
und von der Mediums-Durchflussmenge bzw. Druck abhängigen
Frequenz-Signale im Frequenz-Spannungswandler 5 in
analoge Spannungssignale umgewandelt werden. Es können
auch Messeinrichtungen verwendet werden, welche direkt
ein dem Messwert entsprechendes Spannungs- oder Strom-Signal
erzeugen. Ein Vergleicher 8 ist mit einem Sollwertgeber 7
und mit dem Istwertgeber 6 wirkverbunden. In einem Anzeigegerät 9 kann durch Umschaltung eines Schalters 10 entweder
der Istwert oder der Sollwert abgelesen werden. Das
Sollwertsignal wird entweder manuell eingestellt z.B.
durch Verwendung eines Potentiometers oder als Normsignal von einem führenden Prozess eingegeben.

- 4 -

Im Vergleicher 8 wird aus dem Istwertsignal und dem
Sollwertsignal ein analoges Differenzwert-Signal
erzeugt, welches einem Regler 11 zugeführt wird.

Der Regler bildet aufgrund seiner Charakteristik ein
Ausgangssignal, wobei er je nach Anforderung bzw. Verwendungszweck der Regeleinrichtung wie allgemein bekannt
als ein P-, I-, PI-, PD- oder PID-Regler ausgebildet sein
kann. Das vom Regler ausgehende analoge Regelsignal
wird dann aufgeteilt und in zwei Signalsträngen 12a und
12b je einem Spannungs-Frequenz-Wandler 13a und 13b
zugeführt, wobei im zweiten Signalstrang 12b ein Signal-
Umkehr-Gerät 14 angeordnet ist, welches das analoge
Regelsignal im Signalstrang 12b in ein Signal mit umgekehrtem
Wert umwandelt, das heisst ein positives Spannungssignal
wird in ein negatives Spannungssignal umgewandelt. In den
Spannungs-Frequenzwandlern 13a, 13b werden die positiven
analogen Signale in Impuls-Signale mit einer von der
Spannung U des analogen Signales abhängigen Frequenz F
umgewandelt. Diese Impuls-Signale werden je einem Impuls-
Former 15a bzw. 15b - genannt auch ein monostabiler Multivibarator - zugeleitet, welcher die Länge des Impulses
unabhängig von der Frequenz immer konstant hält.

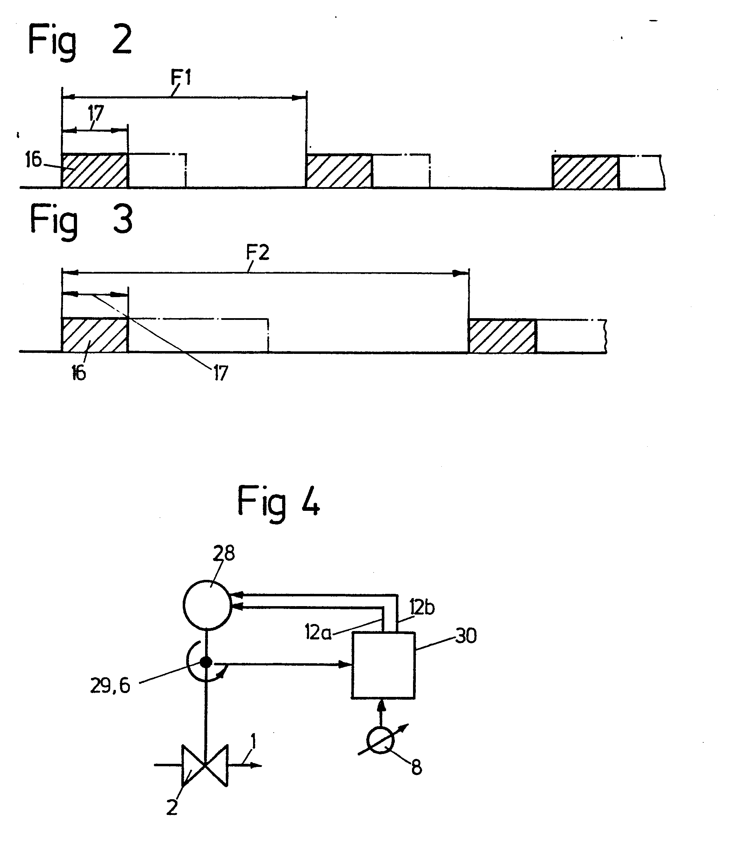

Eine derartige Folge von Impulsen 16 mit einer Impulslänge gemäss Pos. 17 bei zwei verschiedenen Frequenzen
$F_1$ und $F_2$ ist aus den beiden Fig. 2 und 3 ersichtlich,
wobei die strichpunktierte Linie die Impulslänge 17a
zeigt, wenn diese nicht konstant gehalten wird.

Weiterhin ist aus Fig. 1 ersichtlich, dass die Impulssignale mittels je einem Verstärker 18a und 18b verstärkt und dann direkt je einem Magnet 19a und 19b von

- 5 -

Magnet-Absperr-Ventilen 20a und 20b zugeleitet werden.
Die beiden Magnet-Absperr-Ventile 20a und 20b sind
in Leitungen für ein Druckmedium wie z.B. Luft oder Oel
angeordnet, und bilden einen Servo-Steuerkreis für
das Stellorgan 2, dessen Stellglied als ein mit diesem
Druckmedium beaufschlagbare Kolben-Zylindereinheit 22 ausgebildet ist, welche eine an einer Kolbenseite angeordnete.Feder 23 aufweist. Das eine Magnet-Absperr-Ventil
20b ist in einer von einem Druckmittelerzeuger 24 z.B.
das Druckluftnetz zur Kolben-Zylindereinheit 22 führenden
Zufuhrleitung 25 und das andere Magnet-Absperr-Ventil 20b
in einer von der Kolben-Zylindereinheit 22 zu einem Auslass
führenden Abflussleitung 26 angeordnet. In beiden Leitungen
25, 26 sind einstellbare Drosseln 27 angeordnet.

Ist z.B. die in der Messeinrichtung 3 gemessene Durchflussmenge gegenüber dem Sollwert zu gross, entsteht
ein positives Regelsignal, welches im Signalstrang Impulse
einer bestimmten Länge mit einer zum Differenzwert
zwischen Ist- und Sollwert proportionalen Frequenz
erzeugt. Die Frequenz, d.h. die Impulse je Zeiteinheit
ist um so grösser, je grösser die Abweichung des Istwertes vom Sollwert ist. Diese Impulssignale werden dem
Magnet 19a zugeführt, wodurch das Absperr-Ventil 20a
entsprechend dem Impuls öffnet, und das Stell-Organ 2
durch den Druck der Feder 23 impulsförmig schliesst, bis
die eingestellte Durchflussmenge in der Rohrleitung 1
erreicht wird. Ist die gemessene Durchflussmenge zu
gross, wird ein entsprechendes Impulssignal dem Magnet
19b zugeführt und durch Oeffnen des Absperr-Ventils 20b
wird das Druckmedium in Impulsen in die Kolben-Zylindereinheit 22 geleitet und das Stellorgan 2 weiter geöffnet.

Gemäss einer in Fig. 4 dargestellten einfacheren Ausführungsvariante ist das Stellglied beim Stellorgan 2 ein Elektromotor 28, der Istwertgeber 6 ein direkt mit dem Stellglied gekoppelter Stellungsmelder 29 wie z.B. ein Drehmelderund der Sollwertgeber 8 z.B. ein Potentiometer. Der mit Position 30 bezeichnete Block umfasst die in Fig. 1 innerhalb der strichpunktierten Linie 30 angeordneten Geräte und ist ein Regelgerät, dessen ausgehenden Signalstränge 12a und 12b direkt mit dem Elektromotor 28 verbunden sind. Die Verstellung des Stellorganes 2 erfolgt durch impulsartigen Antrieb des Elektromotors mit vom Differenzsignal abhängiger Frequenz.

Die Vorteile des erfindungsgemässen Verfahren mit der dafür erforderlichen Einrichtung sind folgende:

- stetiges Regelverhalten bleibt erhalten
- keine nachteiligen Einflüsse auf die Stellkräfte der Stellglieder
- universell anwendbar
  - direkte Ansteuerung von elektrischen Antrieben, Impulsbetrieb
  - direkte Ansteuerung von Magnetventilen, welche einen Druckmediumstrom vom bzw. zum pneumatischen oder hydraulischen Stellantrieb des Stellorganes steuert, um den Druck im Steuerraum zu bestimmen.

Durch die immer gleiche Impulslänge auch bei unterschiedlicher Frequenz ist die Schrittgrösse an den Stellgliedern im gesamten Arbeitsbereich immer gleich, was ein im Arbeitsbereich immer gleichbleibendes Verhalten der Stellantriebe bzw. Stellorgane gewährleistet.

P a t e n t a n s p r ü c h e

2390/FIP

1. Verfahren zur Regelung einer Regelgrösse, insbesonders
   zur Regelung der Durchflussmenge und/oder des
   Druckes eines Mediums durch Messung des Istwertes
   mit Erzeugung eines analogen Istwertsignales und Vergleich mit dem Sollwert, wobei aus der Differenz ein
   elektrisches Regelsignal erzeugt wird, dadurch gekennzeichnet, dass das Regelsignal aus einzelnen Impuls-Signalen besteht, dessen Frequenz sich proportional zur Grösse des analogen Differenzsignales verhält und unverändert aber verstärkt zur Regelung
   eines Stellorganes verwendet wird.

2. Verfahren nach Anspruch 1, dadurch gekennzeichnet, dass
   die Impulslänge des Regelsignals unabhängig von dessen
   sich ändernden Frequenz immer konstant ist.

3. Verfahren nach Anspruch 1 oder 2, dadurch gekennzeichnet, dass zwei parallele analoge Signale durch
   Invertierung des einen Analogsignals gebildet werden,
   wobei nur das Signal mit positiver Amptitude in Impulssignale umgewandelt wird.

4. Verfahren nach Anspruch 3, dadurch gekennzeichnet, dass beide Impuls-Signale verstärkt je einem Magnetventil zugeführt werden, mittels welchem Druck-Impulse eines Druckmediums bei dem Stellorgan gesteuert werden.

5. Verfahren nach Anspruch 3, dadurch gekennzeichnet, dass beide Impuls-Regelsignale verstärkt einem Elektro-Motor des Stellorgans zugeführt werden.

6. Einrichtung zur Durchführung des Verfahrens nach einem der Ansprüche 1 bis 5 mit einem Istwertgeber, einem Sollwertgeber, einem Vergleicher, einem Regler, mindestens einem Verstärker und einem mit letzterem wirkverbundenen Stellorgan, dadurch gekennzeichnet, dass zwischen dem Regler (11) und einem Verstärker (18a) mindestens ein Signalstrang (12a) mit einem Spannungs-Frequenz-Wandler (13a) und einem Impuls-Former (15a) angeordnet ist.

7. Einrichtung nach Anspruch 6, dadurch gekennzeichnet, dass zwischen dem Regler (11) und einem zweiten Verstärker (18b) ein zweiter Signalstrang (12b) mit einem Signal-Umkehr-Gerät (14), einem zweiten Spannungs-Frequenz-Wandler (13b) und einem zweiten Impuls-Former (15b) angeordnet ist.

8. Einrichtung nach Anspruch 7, dadurch gekennzeichnet, dass jeder Verstärker (18a, 18b) mit jeweils einem Magnet (19a, 19b) jeweils eines Absperr-Ventils (20a, 20 b) wirkverbunden ist, welche in Leitungen (25, 26) für ein Druckmedium angeordnet sind, die mit einem Druckmittel betätigbaren Stellorgan (2) verbunden sind.

9. Einrichtung nach Anspruch 7, dadurch gekennzeichnet, dass das eine Absperr-Ventil (20b) in einer Zufuhrleitung (25) und das andere Absperr-Ventil (20a) in einer Abfuhrleitung (26) für das Druckmedium angeordnet ist.

10. Einrichtung nach Anspruch 7, dadurch gekennzeichnet, dass jeder Verstärker (18a, 18b) direkt mit einem Elektromotor (28) des Stellorganes (2) wirkverbunden ist.

Fig. 1

0141061

# Fig 2

F1

17

16

# Fig 3

F2

16    17

# Fig 4

28

12b

12a

29,6

30

1

2

8

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 487 458 (M. MARTENS et al.) <br> * Spalte 1, Zeile 47 - Spalte 5, Zeile 59; Figuren 1-5 * | 1,2,6 | G 05 B 11/30 <br> G 05 D 7/06 <br> G 05 D 16/20 |
| Y | | 3-5,7-10 | |
| Y | US-A-3 796 939 (L. RAGGI et al.) <br> * Spalte 1, Zeilen 45-68; Spalte 3, Zeile 59 - Spalte 6, Zeile 10; Figuren 2,4 * | 3,5,7,10 | |
| A | | 1,2,6 | |
| Y | US-A-3 295 421 (L.F. McCORMICK) <br> * Spalte 2, Zeilen 7-65; Figur 1 * | 4,8,9 | RECHERCHIERTE SACHGEBIETE (Int. Cl.4) |
| X | FR-A-2 406 246 (SOFTAIR) <br> * Seite 3, Zeile 35 - Seite 4, Zeile 24; Figur 1 * | 1,6 | G 05 B 11 <br> G 05 D 3 |
| A | FR-A-1 542 518 (COMMISSARIAT A L'ENERGIE ATOMIQUE) <br> * Seite 1, rechte Spalte, Zeile 28 - Seite 2, linke Spalte, Zeile 41; Figur 1 * | 1-3,5-7,10 | |

--- -/-

Der vorliegende Recherchenbericht wurde für alle Patentansprüche erstellt.

| Recherchenort <br> DEN HAAG | Abschlußdatum der Recherche <br> 04-01-1985 | Prüfer <br> POINT A.G.F. |
|---|---|---|

## Europäisches Patentamt

**0141061**
Nummer der Anmeldung

# EUROPÄISCHER RECHERCHENBERICHT

EP 84 10 8973

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | US-A-3 652 912 (M.P. BORDONARO) | | |
| A | DE-A-1 954 636 (LICENTIA) | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 04-01-1985 | POINT A.G.F. |